# EUROPÄISCHE PATENTSCHRIFT

(11) **EP 0 402 583 B1**
(45) Veröffentlichungstag und Bekanntmachung des Hinweises auf die Patenterteilung: **02.06.1993**
(21) Anmeldenummer: 90105612.7
(22) Anmeldetag: 24.03.1990
(51) Int. Cl.: B60G 17/015, G01D 18/00

(54) **Verfahren und Vorrichtung zur Justierung einer Höhenstands-Regelanlage eines Fahrzeugs**
Method and device for the calibration of a height-control system of a vehicle
Méthode et dispositif pour le calibrage d'un système de contrôle d'assiette d'un véhicule

(30) Priorität: 10.06.1989 DE 3919040
(43) Veröffentlichungstag der Anmeldung: 19.12.1990
(73) Patentinhaber: Dr.Ing.h.c. F. Porsche Aktiengesellschaft, 70435 Stuttgart (DE)
(72) Erfinder: Lehr, Hans-Thomas, Dipl.-Ing. (FH), D-7251 Weissach (DE); Schäfer, Peter, Dipl.-Ing., D-7251 Mönsheim (DE)

(56) Entgegenhaltungen:
- EP-A- 0 297 736
- EP-A- 0 324 417
- WO-A-89/09702
- DE-A- 3 432 430
- DE-A- 3 540 599
- DE-A- 3 726 344
- DE-A- 3 804 457
- GB-A- 2 160 324
- US-A- 4 593 920

## Beschreibung

Die Erfindung betrifft ein Verfahren und eine Vorrichtung nach der Gattung des Anspruchs 1.

Eine Höhenstands-Regelanlage eines Fahrzeugs umfaßt im wesentlichen eine Einstellvorrichtung für den Höhenstand h der Karosserie des Fahrzeugs gegenüber dem Fahrwerk oder einer Fahrbahn, sowie eine von einem Steuergerät gesteuerte Ansteuereinrichtung für die Einstelleinrichtung und einen Relativwegsensor, der den Höhenstand erfaßt.

Die Einstelleinrichtung kann bspw. als Hydraulik- oder Pneumatikzylinder ausgeführt und in einem Federbein angeordnet sein welches das Fahrwerk gegenüber der Karosserie abstützt. Die Ansteuereinrichtung umfaßt neben einem Druckversorgungskreis mit Pumpe, Sumpf und Druckspeicher ferner Stellglieder (Magnetventile), mit denen der Druck in den Hydraulikzylindern einzelner Räder oder Achsen erhöht (Fahrzeug anheben) oder vermindert (Fahrzeug senken) werden kann. Eine derartige Höhenstands-Regelanlage ist bspw. der US-A-4 593 920 zu entnehmen. Vergleichbare Anlagen sind ferner noch in der DE-C2 34 37 799 der US-A-4 659 104 und der US-A-4 700 303 gezeigt.

Bei diesen Höhenstands-Regelanlagen treten jedoch produktions- und montagebedingte Toleranzen auf, die zu einer Verfalschung des vom Relativwegsensor abgegebenen Höhenstands-Istsignal hi, und damit zu einer falschen Höhenstandsregelung führen.

Eine Höhenregeleinrichtung für luftgefederte Fahrzeuge, bei der eine Kalibrierung des Höhensensors ohne zusätzliche mechanische Hilsmittel erfolgt, ist aus der WO-89/09702 (Stand der Technik gemäß Art. 54(3)) bekannt. Hierzu werden die Luftfederelemente als Hebevorrichtungen während die von einer Steuereinheit wahrgenommenen Höhenregelfunktion unterbunden ist. Ein an die Steuereinheit Testgerät steuert die Luftversorgung der Luftfederelemente und die Höhenlage der Fahrzeugkörpers wird in die gewünschte Nullage gebracht. Das nun vorliegende Signal des Höhensensors wird in einem nichtflüchtigen Speicher abgelegt und dann als Sollwert für die Höhenregelung verwendet.

Es ist daher Aufgabe der Erfindung, ein Verfahren und eine Vorrichtung zur Justierung einer Höhenstands-Regelanlage eines Fahrzeugs zu schaffen, die es mit einfachen Mitteln erlaubt, diese Toleranzen auszugleichen.

Die Aufgabe ist durch die kennzeichnenden Merkmale der Ansprüche 1 bzw. 4 gelöst. Weitere, die Erfindung in vorteilhafter Weise ausgestaltende Merkmale sind in den Unteransprüchen enthalten.

Die Vorteile der Erfindung sind in erster Linie darin zu sehen, daß ein Verfahren und eine Vorrichtung zur Justierung einer Höhenstands-Regelanlage eines Fahrzeugs geschaffen ist, die es mit einfachen Mitteln erlaubt, produktions- und montagebedingte Toleranzen, insbesondere an der Karosserie der Anbindung der Radaufhängung an der Karosserie, dem Fahrwerk selbst und am Relativwegsensor auszugleichen. Die Justierung erfolgt hierbei ohne umfangreiche und aufwendige mechanische Abgleichprozeduren, wie sie bspw. am Sensor selbst dessen Anbindung an der Karosserie oder einer Abgleicheinrichtung (Stellpotentiometer) am Steuergerät vorgenommen werden könnten.

Vielmehr erfolgt die Justierung des - in an sich bekannter Weise - diagnosefähigen Steuergeräts (siehe hierzu bspw. DE-A1 37 26 344, DE-A1 35 40 599 und DE-A1 34 32 430) der Höhenstandsregelanlage in einem Diagnosmodus, in den das Steuergerät durch Anschluß eines Diagnosgeräts (Bosch-Typ KTS 301, entsprechend konfigurierter Personal-Computer) gebracht wird.

Eine Funktion "Höhenstands-Justierung" wird mittels des Diagnosegerats aufgerufen und der Höhenstand der Karosserie des Fahrzeugs mit einem Maßstab oder einem Meßnormal vermessen. Über Eingabeeinrichtungen am Diagnosegerät werden die Ansteuereinrichtungen schrittweise so angesteuert, bis der Höhenstand h dem vorgegebenen Höhenstand hsns (Normallage) entspricht. Nach Aufruf einer Setzfunktion des Diagnosegeräts werden die augenblicklichen Istwerte hi der Relativwegsensoren als Sollwerte hsn für die Normallage übernommen und die Justierung (und die Diagnose) abgebrochen.

Die Erfindung wird nachstehend anhand von in den Zeichnungen dargestellten Ausführungsformen näher erläutert.

Es zeigt:
- Fig. 1:: Eine Höhenstands-Regelanlage eines Fahrzeugs,
- Fig. 2:: eine Darstellung von Toleranzen an einer Höhenstands-Regelanlage nach Fig. 1,
- Fig. 3:: ein Blockschaltbild einer Konfiguration zur Durchführung einer Justierung einer Höhenstands-Regelanlage nach Fig. 1,
- Fig. 4:: ein Bildschirm-Eingabemenü für ein Diagnosegerät zur Durchführung der Justierung,
- Fig. 5:: ein Ablaufdiagramm für die Justierung,
- Fig. 6:: eine Bildschirm-Ausgabe für nicht korrekt durchgeführte Justierung,
- Fig. 7:: ein Höhenstands-Sollwert - Höhenstands-Diagramm,
- Fig. 8:: ein Diagramm nach Fig. 6 mit innerhalb bestimmter Grenzen liegendem Wert des Höhenstands für eine Normallage,
- Fig. 9:: ein Diagramm nach Fig. 7 jedoch mit einem außerhalb der Grenzen liegenden Wert.

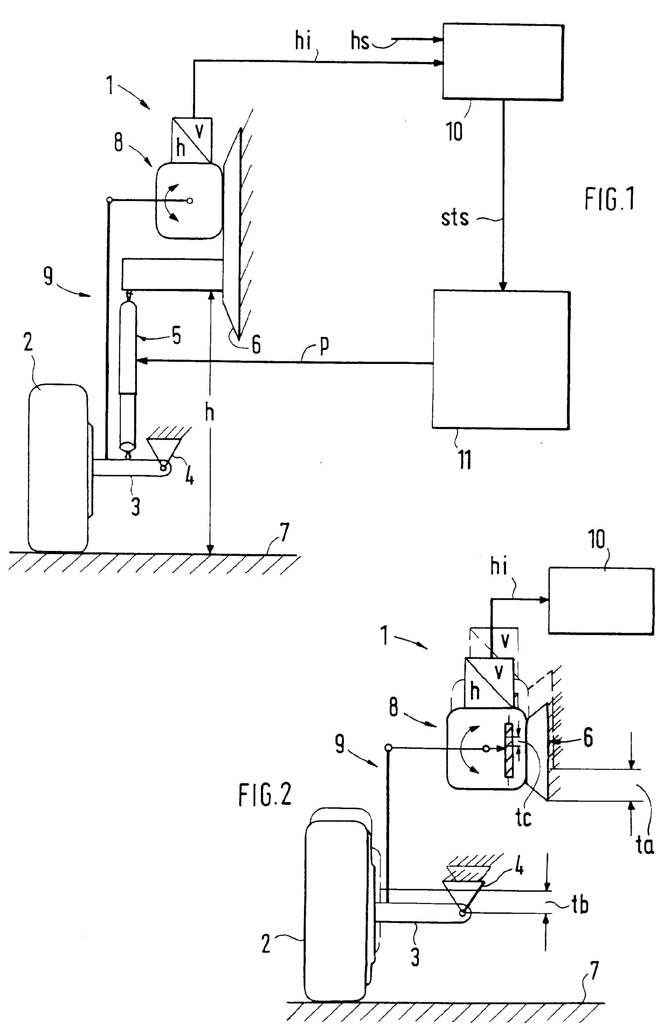

In Fig. 1 ist mit 1 ein Schema einer Höhenstands-Regelanlage eines Fahrzeugs gezeigt. Ein Rad 2 ist über einem Radträger 3 mit einer ersten Karosserieanbindung 4 drehfest verbunden. Der Radträger 3 stützt sich über eine Einstelleinrichtung 5 (Federbein mit Hydraulik- oder Pneumatikzylinder) gegen eine zweite Karosserieanbindung 6 ab. Über die Einstelleinrichtung 5 ist die Höhe h gegenüber dem Fahrwerk 2, 3 bzw. einer Fahrbahn 7 einstellbar.

Ein an der zweiten Karosserieanbindung 6 befestigter Relativwegsensor 8 erfaßt über ein Hebelgestänge 9 (indirekt über das Rad 2) den Höhenstand h der Karosserie gegenüber der Fahrbahn 7 und wandelt diesen in ein (elektrisches) Höhenstands-Istsignal hi um das einem Steuergerät 10 zugeführt wird. Das Steuergerät 10 vergleicht das Höhenstands-Istsignal hi mit einem vorgegebenen oder vorgebbaren Höhenstands-Sollsignal hs und erzeugt Steuersignale sts, aufgrund derer eine Ansteuereinrichtung 11 bspw. einen Druck p für die Einstelleinrichtung 5 erhöht oder vermindert, wodurch der Höhenstand h entsprechend vergrößert oder verkleinert wird.

Auf diese Höhenstandsregelung die in den oben genannten Schutzrechten beschrieben ist, soll jedoch nicht näher eingegangen werden; es kann sich hierbei um pneumatische, hydraulische und/oder elektrische Höhenstands-Regelanlagen handeln. Ebenso sind auch andere Hilfsenergien zum Einstellen des Höhenstands, wie z.B. elektrische oder elektromechanische denkbar.

Fig. 2 zeigt nun mögliche Toleranzen an dieser Höhenstands-Regelanlage. Hierbei sind Toleranzen in der Anbindung des Relativweg-Sensors 8 an der zweiten Karosserieanbindung 6 bzw. an der Fahrzeugkarosserie (Toleranz ta), in der Anbindung des Fahrwerks 2, 3 an der ersten Karosserieanbindung 4 bzw. des Fahrwerks 2, 3 (Toleranz tb) und elektrische bzw. mechanische Toleranzen innerhalb des Relativweg-Sensors 8 (Toleranz tc) dargestellt. Diese Toleranzen ta, tb und tc addieren sich zu einer Gesamttoleranz tgesamt, welche das Höhenstands-Istsignal hi ggf. stark verfälschen können.

Es ist deshalb eine Justierung des Relativweg-Sensors 8 notwendig. Da dieser jedoch oft an unzugänglicher oder schwer zugänglicher Stelle an der Karosserie angeordnet ist, soll die Justierung mittels des erfindungsgemäßen Verfahrens erfolgen.

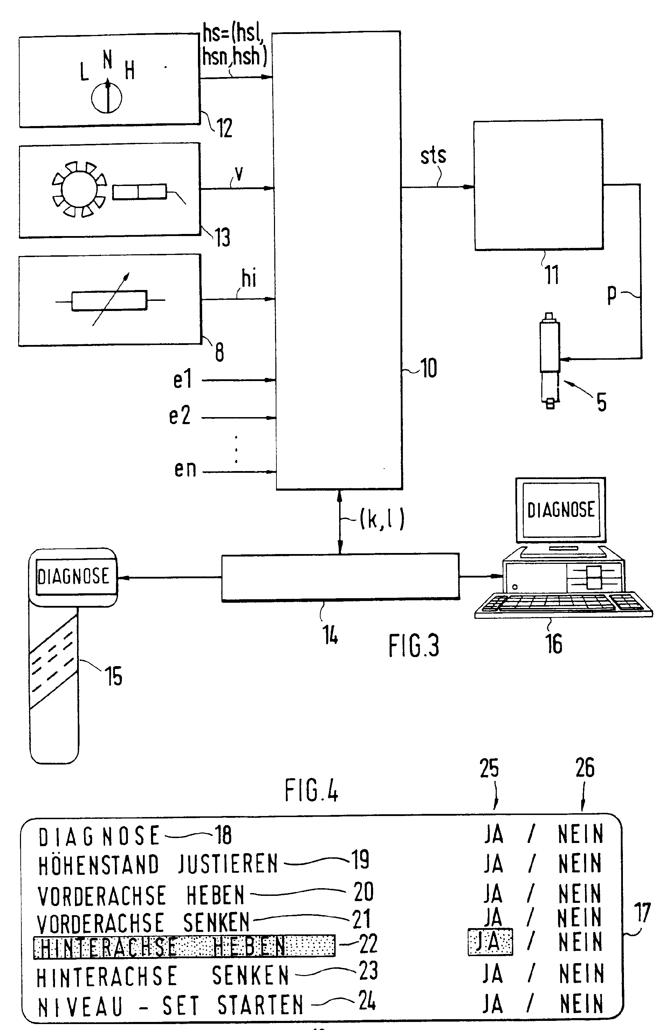

Hierzu ist in Fig. 3 das Steuergerät 10 mit den wichtigsten Ein- und Ausgangskomponenten und der Konfiguration zur Durchführung der Justierung gezeigt. Die Eingangskomponenten umfassen in der Regel einen Schalter 12 zum Vorgeben des Höhenstands-Sollsignal hs (niedriger Höhenstand L, Normalhöhenstand N und hoher Höhenstand H, entsprechend den Höhenstands-Sollsignalen hsl, hsn und hsh).

Neben dem Relativweg-Sensor 8 kann bspw. noch ein Geschwindigkeitsgeber 13 vorhanden sein der ein Geschwindigkeitssignal v an das Steuergerät 10 abgibt. Ferner können noch weiter Eingangsgröße e1, e2, ..., en das Steuergerät 10 beinflussen, auf die jedoch nicht weiter eingegangen werden soll. Aufgrund dieser Signale steuert das Steuergerät 10 die Ansteuereinrichtung 11 bzw. die Einstelleinrichtung 5 an.

Das diagnosefähige Steuergerät 10 kann über einen Diagnosebus (k, l) bzw. eine Diagnoseschnittstelle 14 mit einem Diagnosegerät 15 (bspw. vom Typ KTS 301) der Fa. Bosch oder einem entsprechend konfigurierten Personal-Computer 16 verbunden werden. Das Diagnosgerät 15 bzw. 16 weist zur Durchführung der Justierung Eingabeeinrichtungen sowie von diesen angesteuerte Funktionseinheiten auf, mit welchen die Funktionen "Höhenstands-Justierung", "schrittweises Ansteuern der Einstelleinrichtung" und eine Setzfunkitoin (SET) eingeleitet werden können wobei das Diagnosegerät 15, 16 Signale auf die Diagnoseschnittstelle 14 derart aufschaltet, daß das Steuergerät 10 die entsprechenden Funktionen die weiter unten noch erklärt werden durchführt.

Die Eingabeeinrichtungen können auch wie in Fig. 4 gezeigt, als Bildschirm-Eingabemenü 17 realisiert sein wobei die einzelnen durch Text oder Sinnbild dargestellten Eingabebefehle (Diagnose 18, Höhenstand justieren 19, Vorderachse heben 20 und senken 21, Hinterachse heben 22 und senken 23, SET starten 24, sowie Menüauswahl aktivieren (Ja) 25 und zur nächsten Menüauswahl fortfahren (Nein), 26) mittels einer bekannten Cursorsteuerung angewählt und mittels einer Eingabetaste derart ausgelöst werden, daß sie wie manuell betätigte Eingabeeinrichtungen wirken.

Bei der Höhenstands-Justierung nach der Erfindung sind nun die im folgenden beschriebenen Schritte durchzuführen:

Zunächst ist das Fahrzeug in einem definierten Zustand und auf eine Meßebene aufzubringen, d. h., daß z. B. der Reifendruck auf einen Normwert einzustellen ist, und das Fahrzeug bspw. einen bestimmten Beladungszustand (Leergewicht) vorweisen muß. Nach Anschluß des Diagnosegerats 15, 16 an die Diagnoseschnittstelle 14 wird zunächst in einem ersten Schritt das Steuergerät 10 in einen Diagnosemodus gebracht und mittels des Diagnosegeräts 15, 16 die Funktion "Höhenstands-Justierung" aufgerufen.

In einem zweiten Schritt steuert das Steuergerät 10 die Einstelleinrichtung 5 so ein, daß das Höhenstand-Istsignal hi an einen Grundwert hsg des Höhenstands-Sollsignals herangeführt wird.

In einem dritten Schritt schaltet das Steuergerät von Höhenstandsregelung (hi = fr (hs, hi)) auf Höhenstandssteuerung (hi = fs) um.

In einem vierten Schritt wird der Höhenstand h des Fahrzeugs bzw. von Fixpunkten der Karosserie gegenüber der Meßebene manuell (z. B. mit einem Normmaß oder einem Maßstab) erfaßt und in einem fünften Schritt durch manuelles, schrittweises Ansteuern der Einstelleinrichtung (bspw. mit den Menüpunkten Achse heben 20, 22 bzw. senken 21, 23 des Menüs 17 nach Fig. 4), unter Einbeziehung des vierten Schritts der Erfassung des Höhenstands h, der Höhenstand erhöht oder vermindert, und zwar bis der Höhenstand h einen definierten der Normallage entsprechenden Wert hsns erreicht hat.

In einem sechsten Schritt wird über das Diagnosegerät 15, 16 eine Setzfunktion (SET) 24, des Steuergeräts 10 aufgerufen, in der der augenblickliche Istwert hi eingelesen und als Höhenstands-Sollwert hsn = hs = hi (Normallage) übernommen wird.

In einem siebten Schritt wird das Steuergerät von Höhenstands-Steuerung hi=fs auf Höhenstandsregelung hi = fr ( hs, hi) umgeschaltet, die Funktion Höhenstands-Justierung beendet und die Diagnose abgebrochen.

Hierbei kann bei Aufruf der Setzfunktion (SET) eine Überprüfung der Größe des Istwerts hi folgen. indem dessen Abweichung vom Grundwert hsg bestimmt und der Betrag dh der Abweichung (dh = hsg-hi) mit einem Grenzwert lim verglichen wird. Der Istwert hi wird als Sollwert hs nur dann übernommen wenn der Betrag der Abweichung dh den Grenzwert lim nicht überschreitet. Ist dies der Fall, so erfolgt eine Fehlerabspeicherung in einem Fehlerspeicher des Steuergeräts 10 und die Justierung kann alternativ wiederholt oder unter Beibehaltung (hs = hsg des Grundwerts hsg als Sollwert hs) abgebrochen werden (Notlaufprogramm).

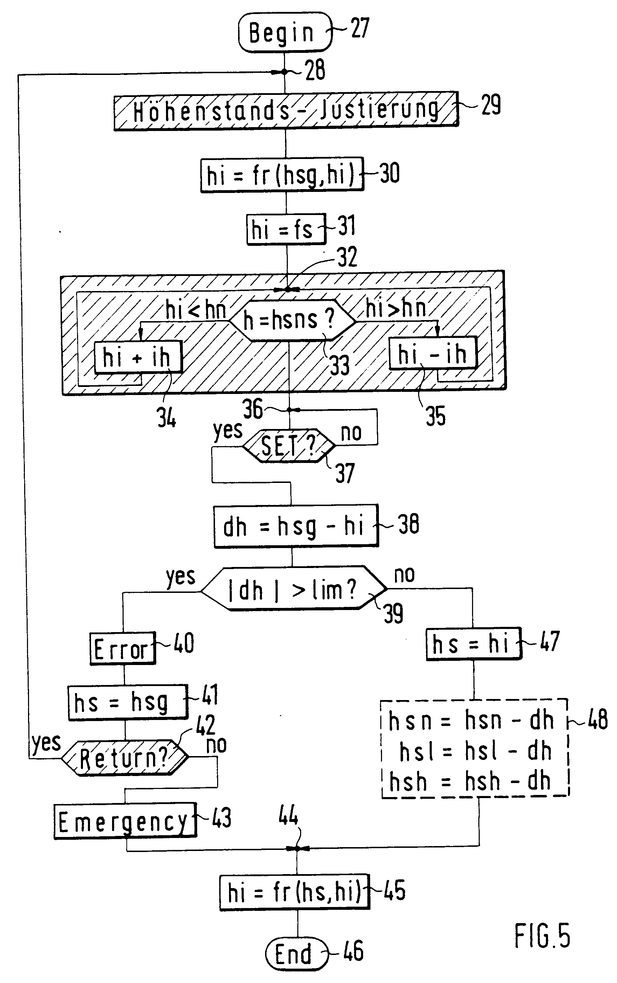

Dies ist nun anhand eines Flußdiagramms nach Fig. 5 bildlich dargestellt: Hierbei sind die von der Bedienperson auszuführenden Vorgänge in das Ablaufdiagramm miteinbezogen und durch Straffierung gekennzeichnet.

Nach dem Programmstart 27 (erster Schritt) und nach Passieren des Verzweigungspunkts 28 wird abgewartet, bis die Bedienperson die Funktion Höhenstands-Justierung, 29 ausgelost hat. Sodann wird der Höhenstand-Istwert vom Steuergerät 10 an den Grundwert hsg des Höhenstands-Sollwerts herangeführt (zweiter Schritt) 30 und das Steuergerät 10 von Regelung auf Steuerung hi=fs umgeschaltet, 31 (dritter Schritt).

Danach erfolgen nach Passieren des Programmpunkts 32 die manuell von der Bedienperson durchzuführenden Schritte 4 und 5, nämlich das Messen des Höhenstands h bzw. der Vergleich des Höhenstands h mit der Normallage hsns, 33, das schrittweise Erhöhen des Höhenstands 34 bzw. das schrittweise Vermindern des Höhenstands 35 und die Rückkehr zum Verzweigungspunkt 32, bis der Vergleich korrekt ist. Das Diagnosegerät wartet nach Passieren einer Marke 36 ab bis die Setzfunktion (SET) 37 aufgerufen wird (Warteschleife).

Anschließend wird die Abweichung dh des Istwerts hi vom Grundwert hsg des Höhenstands-Sollwerts ermittelt, 38 und geprüft, ob der Betrag der Abweichung dh größer als der Grenzwert lim ist, 39. Ist dies der Fall, so erfolgt die Fehlerabspeicherung 40, der Höhenstands-Sollwert hs wird auf den Grundwert hsg gesetzt 41 und es erfolgt eine Abfrage 42, ob die Höhenstands-Justierung wiederholt oder abgebrochen werden soll (Return). Hierzu springt bspw. der Menübalken im Menü 17 auf Höhenstand justieren, 19.

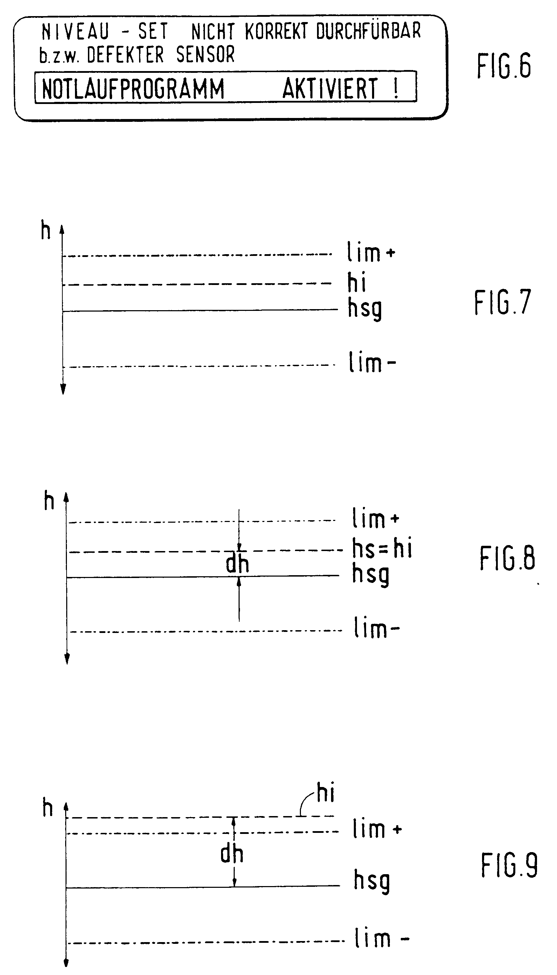

Gibt nun die Bedienperson ja ein so springt das Programm zum Verzweigungspunkt 28 zurück, wird nein eingegeben, so wird ein sogenanntes Notlaufprogramm 42 angezeigt, dessen Bildschirm-Darstellung Fig. 6 zu entnehmen ist. Dies bedeutet, daß entsprechend Programmschritt 41 der Sollwert hs auf den Grundwert hsg zurückgesetzt und dieser als Höhenstands-Sollwert hs (hsn für die Normallage) übernommen wird; andere Höhenstandsvorgaben durch den Schalter 12 sind dann wirkungslos. Nach einem Verzweigungspunkt 44 wird auf Höhenstandsregelung hi = fr (hs, hi) zurückgeschaltet, 45 und das Programm beendet, 46.

Ist die Abfrage 39 negativ, so wird bei (fest) vorgegebenem Höhenstands-Sollsignal hs das augenblickliche Höhenstands-Istwertsignal hi als Höhenstands-Sollsignal hs übernommen, 47 oder bei vorgebbarem Höhenstands- Sollsignal (hs = hsl; hs = hsh; hs = hsh) das niedrige Höhenstands-Sollsignal hsl, das normale Höhenstands-Sollsignal hsn und das hohe Höhenstands- Sollsignal hsh um die Abweichung dh vermindert, 48 bzw. die Abweichung dh wird als Korrekturgröße für die Sollsignale gesetzt und mit Programmschritt 44 fortgefahren.

In den nachfolgenden Figuren 7 bis 9 sind noch bestimmte Falle der Lage des Istwerts hi, relativ zum Grundwert des Höhenstands-Sollsignals hsg, gezeigt, wobei in Fig. 8 die Abweichung dh des Höhenstands-Istsignals hi vom Grundwert hsg des Höhenstands-Sollsignals hs innerhalb der Grenzen lim+ und lim- liegt, was zu einer korrekten Höhenstands-Justierung führt.

In Fig. 9 dagegen liegt die Abweichung dh außerhalb der Grenzen, was zu der bereits beschriebenen Wiederholung der Höhenstands-Justierung oder dem Aktivieren des Notlaufprogramms mit der Einregelung des Höhenstands-Istsignals hi auf den Grundwert hsg des Höhenstands-Sollsignals hs führt. Hiermit wird bspw. vermieden, daß trotz eines defekten Bauteils (z. B. defekter Relativweg-Sensor) die Justierung durchgeführt oder eine unerlaubte Manipulation am System vorgenommen werden kann (bspw. "Tieferlegen" des Fahrzeugs).

## Patentansprüche

1. Verfahren zur Justierung einer Höhenstands- Regelanlage eines Fahrzeugs, welche wenigstens eine vorzugsweise fluidbetätigte Einstelleinrichtung für den Höhenstand der Karosserie des Fahrzeugs gegenüber dessen Fahrwerk oder einer Fahrbahn, sowie eine von einem Steuergerät gesteuerte Ansteuereinrichtung für die Einstelleinrichtung und einen Relativwegsensor umfaßt, wobei das Steuergerät die Einstelleinrichtung derart ansteuert, daß eine Abweichung des vom Relativwegsensor erfaßten Höhenstands- Istsignals (hi) von einem vorgebbaren Höhenstands- Sollsignal (hs) (hohes Höhenstands-Sollsignal (hs=hsh), normales Höhenstands- Sollsignal (hs=hsn), niedrieges Höhenstands- Sollsignal (hs=hsl)) oder vorgegebenen Höhenstands- Sollsignal (hs) (Normallage (hsn)) minimal wird und wobei das Steuergerät diagnosefähig ist und über eine Diagnoseschnittstelle verfugt, über die Fehler an der Höhenstands- Regelanlage an ein Diagnosegerät ausgegeben werden können, **dadurch gekennzeichnet**, daß das Fahrzeug in einem definierten Zustand (z. B. Reifendruck, Beladung) auf eine Meßebene aufgebracht und
- in einem ersten Schritt das Steuergerät (10) durch Anschluß eines Diagnosegeräts (15, 16) in einen Diagnosemodus gebracht und eine Funktion "Höhenstands- Justierung" (19, 29) aufgerufen wird
- in einem zweiten Schritt das Steuergerät (10) die Einstelleinrichtung (11) so ansteuert daß das Höhenstands- Istsignal (hi) an einen Grundwert (hsg) des Höhenstands- Sollsignals (hs) herangeführt wird (30) wonach
- in einem dritten Schritt das Steuergerät (10) von Höhenstands- Regelung (hi=fr(hs,hi)) auf Höhenstands- Steuerung (hi=fs) umschaltet (31),
- in einem vierten Schritt der Höhenstand (h) des Fahrzeugs bzw. von Fixpunkten der Karosserie gegenüber der Meßebene manuell erfaßt wird (33),
- in einem fünften Schritt durch schrittweises Ansteuern (34, 35) der Einstelleinrichtung (11) unter Einbeziehung des vierten Schritts (33) der Höhenstand (h) erhöht oder vermindert wird bis der Höhenstand (h) einen definierten der Normallage (hsns) entsprechenden Wert erreicht hat,
- in einem sechsten Schritt über das Diagnosegerät (15, 16) eine Setzfunktion (SET (24)) des Steuergeräts (10) aufgerufen wird, in der der augenblickliche Istwert (hi) eingelesen und als Höhenstands- Sollwert (hsn=hs=hi) (Normallage) übernommen wird (47) und
- in einem siebten Schritt die Funktion Höhenstands- Justierung abgebrochen, das Steuergerät (10) von Höhenstands- Steuerung (hi=fs) auf Höhenstands- Regelung (hi=fr(hs,hi)) umgeschaltet (45) und die Diagnose abgebrochen wird.

2. Verfahren nach Anspruch 1, **dadurch gekennzeichnet**, daß im sechsten Schritt bei vorgebbaren Höhenstands- Sollsignal (hs=hsl; hs=hsn; hs=hsh) eine Abweichung (dh=hsg-hi) des Istwerts (hi) vom Grundwert (hsg) als Korrekturgroße für das niedrige Höhenstands- Sollsignal (hsl), das normale Höhenstands- Sollsignal (hsn) und das hohe Höhenstands- Sollsignal (hsh) gesetzt wird (48).

3. Verfahren nach Anspruch 1 oder 2, **dadurch gekennzeichnet**, daß im sechsten Schritt eine Übernahme des augenblicklichen Istwerts (hi) als Sollwert (hs) nur dann erfolgt wenn ein Betrag (|dh|) einer Abweichung (dh=hsg-hi) (38) des Istwerts (hi) vom Grundwert (hsg) einen Grenzwert (lim) nicht überschreitet (39).

4. Verfahren nach Anspruch 3, **dadurch gekennzeichnet**, daß bei Überschreiten des Grenzwerts (lim) eine Fehlerabspeicherung (40) in einem Fehlerspeicher des Steuergeräts (10) erfolgt und die Justierung alternativ wiederholt oder unter Beibehaltung des Grundwerts (hsg) als Sollwert (hs) abgebrochen werden kann (42) (Notlaufprogramm (43)).

5. Vorrichtung zur Justierung einer Höhenstands-Regelanlage eines Fahrzeugs,
- welche wenigstens eine vorzugsweise fluidbetätigte Einstelleinrichtung für den Höhenstand der Karosserie des Fahrzeugs gegenüber dessen Fahrwerk oder einer Fahrbahn, eine von einem Steuergerät gesteuerte Ansteuereinrichtung für die Einstelleinrichtung und einen Relativwegsensor umfaßt,
- wobei das Steuergerät die Einstelleinrichtung derart ansteuert, daß eine Abweichung des vom Relativwegsensor erfaßten Höhenstands-Istsignals (hi) von einem vorgebbaren Höhenstands-Sollsignal (hs) (Hochlage (hsh), Normallage (hsn), Tieflage (hsl) oder vorgegebenen Höhenstands-Sollsignal (hs) (Normallage (hsn)) minimal wird, und
- das Steuergerät diagnosefähig ist und über eine Diagnoseschnittstelle verfügt, über die Fehler an der Höhenstands-Regelanlage an ein Diagnosegerät ausgegeben werden können,
**dadurch gekennzeichnet**, daß
- die Vorrichtung aus dem Steuergerät und dem Diagnosegerät besteht,
- wobei das Steuergerät durch Anschluß des Diagnosegerätes in einen Diagnosemodus versetzbar ist,
- das Steuergerät eine Funktion "Höhenstands-Justierung" mit Unterfunktionen "Schrittweises Ansteuern der Einstelleinrichtung (11)" und "Setzfunktion" (SET (24, 37)) aufweist,
- in der Unterfunktion "Setzfunktion" das augenblickliche Höhenstands-Istsignals (hi) als Höhenstands-Sollsignal (hs) speicherbar ist und
- das Diagnosegerät (15, 16) Eingabeeinrichtungen sowie von diesen angesteuerte Funktionseinheiten aufweist, mit welchen die Funktionen "Höhenstands-Justierung" (29), "Schrittweises Ansteuern der Einstelleinrichtung (11)" und "Setzfunktion" (SET (24. 37)) des Steuergeräts (10) eingeleitet werden können.

6. Vorrichtung nach Anspruch 5 **dadurch gekennzeichnet**, daß das Diagnosegerät (15, 16) auf der Basis eines Mikrorechners aufgebaut ist.

7. Vorrichtung nach Anspruch 6 **dadurch gekennzeichnet**, daß als Eingabeeinrichtung ein Bildschirm- Eingabemenü (17), sowie Cursorsteuertasten und eine Eingabetaste des Diagnosegeräts (15, 16) dient.

## Claims

1. A method of calibrating a height control system of a vehicle, comprising at least one preferably fluid-operated adjusting device for the height of the body of the vehicle in relation to its chassis or a roadway, and comprising a drive arrangement - controlled by a control device - for the adjusting device and a relative path sensor, wherein the control device triggers the adjusting device in such a way that any deviation of the actual height signal (hi), detected by the relative path sensor, from a predeterminable desired height signal (hs) (high desired height signal (hs=hsh), normal desired height signal (hs=hsn), low desired height signal (hs=hsl)) or predetermined desired height signal (hs) (normal position (hsn)) is minimal, and wherein the control device is capable of diagnosis and is provided with a diagnostic interface by means of which errors in the height control system can be fed to a diagnostic device, characterised in that in a defined state (e.g. tyre pressure, load) the vehicle is placed on a measuring plane and
- in a first step the control device (10) is moved into a diagnostic mode through the connection of a diagnostic device (15, 16) and a "height calibration" function (19, 29) is called up,
- in a second step the control device (10) triggers the adjusting device (11) in such a way that the actual height signal (hi) is linked up (30) to a basic value (hsg) of the desired height signal (hs), after which
- in a third step the control device (10) switches over (31) from height regulation (hi=fr(hs,hi)) to height control (hi=fs),
- in a fourth step the height (h) of the vehicle or of fixed points on the body in relation to the measuring plane is manually determined (33),
- in a fifth step, by triggering (34, 35) the adjusting device (11) in a stepwise manner, with incorporation of the fourth step (33), the height (h) is increased or reduced until the height (h) has reached a defined value corresponding to the normal position (hsns),
- in a sixth step a set function (SET (24)) of the control device (10) is called up via the diagnostic device (15, 16), in which function the current actual value (hi) is read in and adopted (47) as the desired height value (hsn=hs=hi) (normal position), and
- in a seventh step the height calibration function is interrupted, the control device (10) is switched over (45) from height control (hi=fs) to height regulation (hi=fr(hs,hi)) and diagnosis interrupted.

2. A method according to claim 1, characterised in that in the sixth step, with predeterminable desired height signal (hs=hsl; hs=hsn; hs=hsh), any deviation (dh=hsg-hi) of the actual value (hi) from the basic value (hsg) is set (48) as correction value for the low desired height signal (hsl), the normal desired height signal (hsn) and the high desired height signal (hsh).

3. A method according to claim 1 or 2, characterised in that in the sixth step, the current actual value (hi) is only adopted as desired value (hs) if an amount (|dh|) of any deviation (dh=hsg-hi) (38) of the actual value (hi) from the basic value (hsg) does not exceed (39) a limit value (lim).

4. A method according to claim 3, characterised in that when the limit value (lim) is exceeded, error storage (40) takes place in an error store of the control device (10) and calibration can be repeated or alternatively interrupted (42) with retention of the basic value (hsg) as desired value (hs) (emergency running program (43)).

5. A device for calibrating a height control system of a vehicle,
- which comprises at least one preferably fluid-operated adjusting device for the height of the body of the vehicle in relation to its chassis or a roadway, and a drive arrangement
- controlled by a control device - for the adjusting device and a relative path sensor,
- wherein the control device triggers the adjusting device in such a way that any deviation of the actual height signal (hi), detected by the relative path sensor, from a predeterminable desired height signal (hs) (high position (hsh), normal position (hsn), low position (hsl)) or predetermined desired height signal (hs) (normal position (hsn)) is minimal, and
- the control device is capable of diagnosis and is provided with a diagnostic interface by means of which errors in the height control system can be fed to a diagnostic device,
characterised in that
- the device comprises the control device and the diagnostic device,
- the control device being transposable into a diagnostic mode through the connection of the diagnostic device,
- the control device has a "height calibration" function with sub-functions "stepwise triggering of the adjusting device (11)" and "set function" (SET (24, 37)),
- in the sub-function "set function", the current actual height signal (hi) can be stored as desired height signal (hs), and
- the diagnostic device (15, 16) has input devices and function units triggered thereby, by means of which function units the functions "height calibration" (29), "stepwise triggering of the adjusting device (11)" and "set function" (SET (24, 37)) of the control device (10) can be initiated.

6. A device according to claim 5, characterised in that the diagnostic device (15, 16) is constructed on the basis of a microcomputer.

7. A device according to claim 6, characterised in that a screen input menu (17), cursor control keys and an input key of the diagnostic device (15, 16) serve as input device.

## Revendications

1. Procédé destiné à ajuster un système de réglage de hauteur de véhicules, qui comporte au moins un dispositif de réglage actionné de préférence par un fluide pour la hauteur de la carrosserie du véhicule par rapport à son châssis ou à la chaussée, ainsi qu'un dispositif de commande, commandé par un appareil de commande, du dispositif de réglage et un capteur de distance relative, l'appareil de commande commandant le dispositif de réglage de manière qu'un écart entre le signal de hauteur réelle (hi), détecté par le capteur de distance relative, et un signal de hauteur de consigne (hs) pouvant être donné (signal de consigne de niveau haut (hs = hsh), signal de consigne de niveau normal (hs = hsn), signal de consigne de niveau bas (hs = hsl)) ou un signal de hauteur de consigne donnée (hs) (position normale (hsn)) devienne minimal, et l'appareil de commande étant susceptible d'un diagnostic et disposant d'une interface de diagnostic permettant de signaler à un appareil de diagnostic les défauts du système de réglage de hauteur, caractérisé en ce que le véhicule dans un état défini (par exemple pression des pneus, charge) est amené sur un plan de mesure et
- au cours d'une première étape, l'appareil de commande (10) est amené, par branchement d'un appareil de diagnostic (15, 16), dans un mode de diagnostic et une fonction "ajustage de hauteur" (19, 29) est appelée,
- au cours d'une deuxième étape, l'appareil de commande (10) commande le dispositif de réglage (11) de manière que le signal de hauteur réelle (hi) soit rapproché (30) d'une valeur de base (hsg) du signal de hauteur de consigne (hs), après quoi
- au cours d'une troisième étape, l'appareil de commande (10) commute (31) du réglage de hauteur (hi = fr (hs, hi)) à la commande de hauteur (hi = fs),
- au cours d'une quatrième étape, la hauteur (h) du véhicule ou de points fixes de la carrosserie par rapport au plan de mesure, est enregistrée manuellement (33),
- au cours d'une cinquième étape, par commande pas à pas (34, 35) du dispositif de réglage (11), la hauteur (h) est augmentée ou réduite, en tenant compte de la quatrième étape (33), jusqu'à ce que la hauteur (h) atteigne une valeur définie, correspondant à la position normale (hsns),
- au cours d'une sixième étape, l'appareil de diagnostic (15, 16) appelle une fonction de remise à zéro (SET (24)) de l'appareil de commande (10), dans laquelle la valeur réelle instantanée (hi) est lue et reprise (47) comme valeur de hauteur de consigne (hsn = hs = hi) (position normale) et
- au cours d'une septième étape, la fonction d'ajustage de hauteur est interrompue, l'appareil de commande (10) est commuté (45) de la commande de hauteur (hi = fs) au réglage de hauteur (hi = fr) (hs, hi)) et le diagnostic est interrompu.

2. Procédé selon la revendication 1, caractérisé en ce qu'au cours de la sixième étape, dans le cas où le signal de hauteur de consigne à donner (hs = hsl ; hs = hsn ; hs = hsh), un écart (dh = hsg - hi) de la valeur réelle (hi) par rapport à la valeur de base (hsg) est pris (48) comme grandeur de correction pour le signal de consigne de niveau bas (hsl), le signal de consigne de niveau normal (hsn) et le signal de consigne de niveau haut (hsh).

3. Procédé selon la revendication 1 ou 2, caractérisé en ce qu'au cours de la sixième étape, une reprise de la valeur réelle instantanée (hi) comme valeur de consigne (hs) ne s'effectue que si une valeur (|dh|) d'un écart (dh = hsg-hi) (38) de la valeur réelle (hi) par rapport à la valeur de base (hsg), ne dépasse pas (39) une valeur limite (lim).

4. Procédé selon la revendication 1, caractérisé en ce que dans le cas où la valeur limite (lim) est dépassée, il se produit une mémorisation des défauts (40) dans une mémoire de défauts de l'appareil de commande (10) et l'ajustage peut soit être renouvelé soit interrompu (42) en conservant la valeur de base (hsg) comme valeur de consigne (hs) (programme de secours (43)).

5. Dispositif destiné à ajuster un système de réglage de hauteur de véhicule,
- qui comporte au moins un dispositif de réglage actionné de préférence par un fluide pour la hauteur de la carrosserie du véhicule par rapport à son châssis ou à la chaussée,
- un dispositif de commande, commandé par un appareil de commande, du dispositif de réglage et ion capteur de distance relative, l'appareil de commande commandant le dispositif de réglage de manière qu'un écart entre le signal de hauteur réelle (hi), détecté par le capteur de distance relative, et un signal de hauteur de consigne (hs) pouvant être donné (signal de consigne de niveau haut (hs = hsh), signal de consigne de niveau normal (hs = hsn), signal de consigne de niveau bas :(hs = hsl)) ou un signal de hauteur de consigne donnée (hs) (position normale (hsn)) devienne minimal,
- l'appareil de commande étant susceptible d'un diagnostic et disposant d'une interface de diagnostic permettant de signaler à un appareil de diagnostic les défauts du système de réglage de hauteur,
caractérisé en ce que
- le dispositif est constitué de l'appareil de commande et de l'appareil de diagnostic,
- l'appareil de commande pouvant être amené en mode diagnostic par branchement de l'appareil de diagnostic,
- l'appareil de commande comporte une fonction "ajustage de hauteur" avec sous-fonctions "commande pas à pas du dispositif de réglage (11)" et "fonction de remise à zéro" (SET (24, 37)),
- dans la sous-fonction "fonction de remise à zéro" le signal de hauteur réelle instantanée (hi) peut être mémorisé en tant que signal de hauteur de consigne (hs) et
- l'appareil de diagnostic (15, 16) comporte des dispositifs de saisie ainsi que des unités de fonction commandées par ceux-ci, avec lesquelles les fonctions "ajustage de hauteur" (29),
- "commande pas à pas du dispositif de réglage (11)" et "fonction de remise à zéro" (SET (24, 37)) de l'appareil de commande (10) peuvent être lancées.

6. Dispositif selon la revendication 5, caractérisé en ce que l'appareil de diagnostic (15, 16) est construit sur la base d'un micro-ordinateur.

7. Dispositif selon la revendication 6, caractérisé en ce qu'on a recours comme dispositifs de saisie à un menu de saisie sur écran (17), ainsi qu'à des touches de commande de curseur et à une touche d'entrée de l'appareil de diagnostic (15, 16).
